# EUROPEAN PATENT APPLICATION

(11) **EP 1 072 989 A2**
(43) Date of publication of application: **31.01.2001**
(21) Application number: 00115039.0
(22) Date of filing: 25.07.2000
(51) Int. Cl.: G06F 17/60

(54) **System for purchasing body-related goods on the internet**

(30) Priority: 26.07.1999 JP 21070699
(71) Applicant: Fujibayashi, Masaru, Tokyo 120-0014 (JP)
(72) Inventor: Fujibayashi, Masaru, Tokyo 120-0014 (JP)
(74) Representative: Sties, Jochen, Dipl.-Ing.

(57) **Abstract**

In view of the background described above, it is an object of the present invention to provide a system which makes it possible to purchase desired goods on the Internet while carrying out one's own coordination. It is a further object of the present invention to provide a system which makes it possible to try on various goods and match goods to one's body from the comfort of one's own home or the like in an experience like that done when shopping at a retail store, so as to make it possible to buy goods suited to one's body while enjoying one's own coordination. Furthermore, it is an object of the present invention to provide a system for purchasing body-related goods on the Internet which makes it possible to greatly reduce the amount of returned goods by eliminating the causes for such returns, such as improper size and dissatisfaction with design and the like, which up to now have been determined after the actual arrival of products in the case of mail-order products.

## Description

### BACKGROUND OF THE INVENTION

### FIELD OF THE INVENTION

The present invention relates to a system for purchasing body-related goods on the Internet, and in particular relates to a system which makes it possible to purchase goods such as Western clothes, sweaters, underwear, shirts, clothes such as Japanese clothes, bands, personal ornaments such as body ornaments and head ornaments, footwear, umbrellas, watches, eyeglasses and the like on the Internet while coordinating the sizes thereof to suit one's body.

### DESCRIPTION OF THE PRIOR ART

Up to now, the purchasing of goods required the purchaser to go to a store and try on merchandise in order to buy goods that suit one's body.

However, due to such factors as time and geographical location, there are times when it is not possible for the purchaser to go to the store. Furthermore, in the case where the desired goods are famous brand goods not found on the domestic market but available overseas, it is difficult to purchase such goods.

### SUMMARY OF THE INVENTION

In view of the background described above, it is an object of the present invention to provide a system which makes it possible to purchase desired goods on the Internet while carrying out one's own coordination. It is a further object of the present invention to provide a system which makes it possible to try on various goods and match goods to one's body from the comfort of one's own home or the like in an experience like that done when shopping at a retail store, so as to make it possible to buy goods suited to one's body while enjoying one's own coordination. Furthermore, it is an object of the present invention to provide a system for purchasing body-related goods on the Internet which makes it possible to greatly reduce the amount of returned goods by eliminating the causes for such returns, such as improper size and dissatisfaction with design and the like, which up to now have been determined after the actual arrival of products in the case of mail-order products.

In the system for purchasing body-related goods on the Internet according to the present invention, a purchasing operation is carried out by inputting a three-dimensional, two-dimensional, cross-sectional and/or photographic image of an entire body or a body portion based on size data of the entire body or size data of body portions such as the head, arms and legs; making an appropriate selection to determine whether the entire body or only a portion thereof will be exposed, whether underwear or clothes will be applied, and whether a three-dimensional image, cross-sectional image, plane image and/or photographic image will be used; displaying the selected image on a computer screen; making one or more appropriate selections from merchandise codes, merchandise size data and design data provided from a seller of body-related goods in order to add body-related goods to the displayed image, remove body-related goods from the displayed image, or change the body-related goods shown on the displayed image; and transmitting a purchase order over the Internet for body-related goods judged to suit body type and design preferences.

Further, in the system for purchasing body-related goods on the Internet according to the present invention, the size data can be rewritten with appropriate sizes in accordance with the body type of the purchaser, and the size data can be stored on a portable card or other recording medium.

Furthermore, in the system for purchasing body-related goods on the Internet according to the present invention, the determination of whether or not clothes, hats, wigs, eye glasses, belts, gloves, shoes, neckties, goods which wrap around the body such as necklaces, ornaments and footwear shown in merchandise photographs from mail-order companies will fit one's body type is carried out by having a computer perform appropriate operations to compare one's body size data with one or more of the merchandise code, merchandise size data and design data based on the merchandise photograph.

Moreover, in the system for purchasing body-related goods on the Internet according to the present invention, a dressed picture or an undressed picture of one's body is taken by a computer-mounted camera and displayed on the computer screen, and then body-related goods are coordinated with respect to such displayed picture in order to confirm sizes of the body-related goods.

Further, in the system for purchasing body-related goods on the Internet according to the present invention, the displayed body-related goods and the displayed body image can be moved together to enable views from any desired angle.

Furthermore, in the system for purchasing body-related goods on the Internet according to the present invention, a list of body-related goods from domestic or foreign stores can be prepared in advance, and purchases of body-related goods can be made over the Internet based on such list.

Moreover, in the system for purchasing body-related goods on the Internet according to the present invention, cross-sectional views can be taken at any desired location of the body-related goods displayed in a worn state on the body image to enable reconfirmation of the body-related goods.

Further, in the system for purchasing body-related goods on the Internet according to the present invention, the merchandise size data can be in the form of two-dimensional data, three-dimensional data or a combination thereof.

Furthermore, in the system for purchasing body-related goods on the Internet according to the present invention, coordination can be carried out by first displaying a body image wearing merchandise from one retail store on the computer screen, and then displaying body-related goods from other retail stores located domestically or overseas onto such first displayed image, and in this way merchandise information can be mutually exchanged to enable the purchaser to purchase all desired goods from one retail store.

Moreover, in the system for purchasing body-related goods on the Internet according to the present invention, a two-dimensional or photographic image of a body portion of the purchaser such as the head and face can be displayed on the computer screen to enable the purchaser to coordinate the wearing of hairpieces, glasses, body ornaments and makeup.

### BRIEF DESCRIPTION OF THE DRAWINGS

Fig. 1 is a system block diagram of the system for purchasing body-related goods on the Internet according to the present invention.
Fig. 2 is a process flow chart of the system for purchasing body-related goods on the Internet according to the present invention.

### DETAILED DESCRIPTION OF THE PREFERRED EMBODIMENTS

With reference to the drawings, a detailed description of the preferred embodiments will now be given.

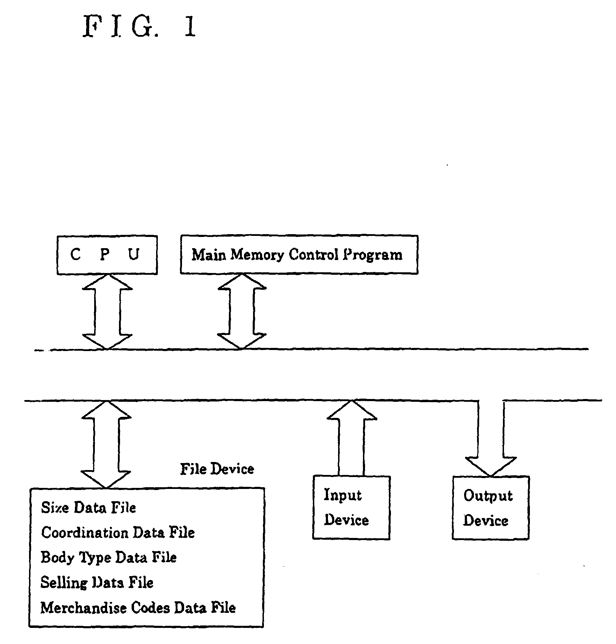

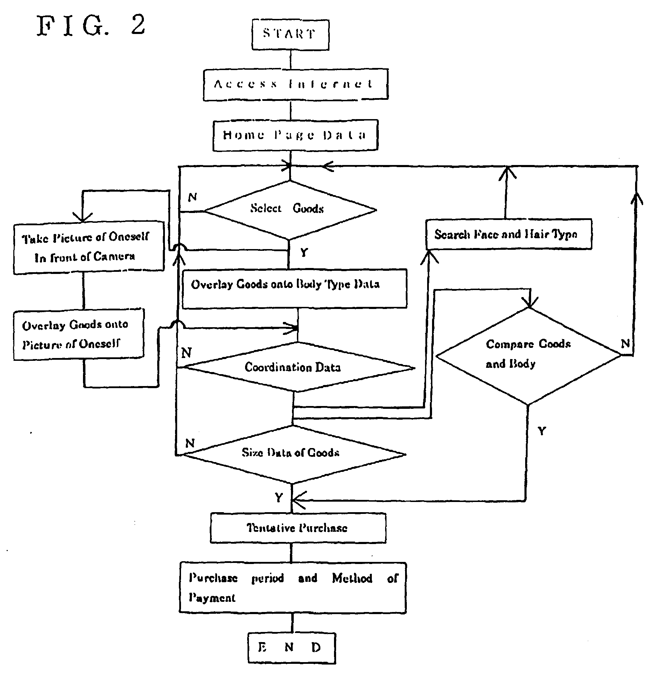

Fig. 1 is a system block diagram of the system for purchasing body-related goods on the Internet according to the present invention, and Fig. 2 is a process flow chart of such system.

First, a connection to the Internet is established. Next, a three-dimensional, two-dimensional or cross-sectional and/or photographic image of the entire body or a body portion of the purchaser is inputted. The size data of the entire body and the size data of body portions such as the head, arms and legs may be obtained by observing actual physical measurements or by using a photodetection means, an optical means such as a laser beam and other means, and then the obtained data is inputted in the form of three-dimensional data or two-dimensional data.

Further, the size data of the entire body and the size data of body portions such as the head, arms and legs may be obtained using another method in which a dressed picture or an undressed picture of one's body is taken by a computer-mounted camera or other means, and then displaying such picture on the computer screen. In this case, because a two-dimensional image is formed, the need to confirm sizes is restricted to cases which depend on the three-dimensional data described above.

Based on the size data of the entire body and the size data of body portions such as the head, arms and legs, a three-dimensional or cross-sectional image of the entire body or a body portion is inputted. Then, after making a selection to determine whether the entire body or only a portion thereof will be exposed, whether underwear or clothes will be added, and whether a plane image or a photographic image will be used, the selected image is displayed on the display screen.

Next, with such selected body image displayed on the display screen, the purchaser makes one or more appropriate selections from the merchandise codes, merchandise size data and design data provided from a domestic or overseas mail-order company which sells body-related goods, a retail store or a server which handles the merchandise information of such companies, and in this way the purchaser can add, change and remove various body-related goods to suit body type and design preferences when purchasing such goods on the Internet. Further, the motivation to buy such goods may be communicated using various media such as televised shopping, radio advertisements, newspaper advertisements, insert advertisements and advertisements hung inside vehicles.

The size data can be rewritten with appropriate sizes in accordance with the body type of the purchaser. Further, the size data is stored on a portable card or various recording mediums.

The determination of whether or not clothes shown in merchandise photographs sent from a mail-order company will fit one's body type is carried out by having the computer perform appropriate operations to compare one's body size data with one or more of the merchandise code, merchandise size data and design data based on the merchandise photograph. Further, in the case of goods such as hats, wigs, eye glasses, belts, gloves, shoes, neckties, goods which wrap around the body such as necklaces, ornaments and footwear, a suitability determination is carried out by having the computer perform appropriate operations to compare one's body size data with one or more of the merchandise code, merchandise size data and design data based on the merchandise photograph of such goods.

In the case of coordinating or using designs of clothes currently being worn on one's body, a dressed picture or an undressed picture of one's body is taken by a computer-mounted camera or other means, and then such picture is displayed on the computer screen. Then, while viewing the image of oneself displayed on the computer screen, coordination can be carried out to select and purchase merchandise suited to oneself. In this regard, the confirmation of size is carried out by the system described above.

Further, by moving the merchandise which one is considering for purchase together with the picture of one's body, it is possible to confirm suitability by viewing such image from any angle desired.

A list of body-related goods can be created based on goods from sources such as the Japanese domestic market, overseas retail stores, mail-order companies or sewers which handle merchandise information, and television shopping. Then, while viewing such list, the system described above can be activated to purchase goods on the Internet.

Further, while displaying the merchandise in a worn state on the image of one's body, cross-sectional views can be taken at any desired location of such image, and this makes it possible to reconfirm the suitability of such merchandise. For example, when wearing clothes, this makes it possible to confirm the amount of room given to the body. Further, when selecting shoes, it is possible to confirm whether or not the shoes will have a proper fit by examining the room given for the instep portion, heel portion and toe portion of such shoes when they are worn.

The merchandise size data is inputted as either two-dimensional data or three-dimensional data for each merchandise item. Further, these types of data may be used together when inputting data. Further, arrangements are made to make it possible to obtain cross-sectional view data.

Fig. 2 is a flow chart of the system for purchasing body-related goods on the internet.

First, after accessing the Internet and searching a borne page, merchandise is selected. Namely, merchandise is selected by selecting one or more of the merchandise code, merchandise size data and design data. Next, based on the size data of the entire body of the purchaser and the size data of body portions such as the head, arms and legs, a three-dimensional, two-dimensional or cross-sectional image of the entire body or a body portion is displayed on the screen, and then the selected merchandise is shown in a worn state on the displayed image of the body or body portion. At this point, coordinating is carried out to judge the suitability of such merchandise. In the case where merchandise is found to be suitable, a comparison between the merchandise and the body size is carried out. At this point, a judgement as to whether or not the merchandise lies within an allowable body size is carried out. When the judgement is "YES" and a purchase is to be carried out, the purchaser selects a payment period, a payment plan such as a lump sum payment or installment payment, and method of payment such as a direct deposit to a financial institution.

Now, when goods are being purchased, the displayed image does not have to be a three-dimensional image, and it is also possible to use a plane image of oneself taken with a camera. Further, by using cross-sectional data, it is possible to check the wearing condition of shoes and the like when such merchandise items are worn, Further, either the selection of merchandise or the displaying of the body image can be carried out first depending on the situation.

The present invention makes it possible to purchase desired goods on the Internet while carrying out one's own coordinating. Further, the present invention which makes it possible to try on various goods and match goods to one's body from the comfort of one's own home or the like in an experience like that done when shopping at a retail store. Moreover, the present invention makes it possible to buy goods suited to one's body while enjoying one's own coordination such as trying on merchandise. Furthermore, the present invention makes it possible to greatly reduce the amount of returned goods by eliminating the causes for such returns, such as improper size and dissatisfaction with design and the like, which up to now have been determined after the actual arrival of products in the case of mail-order products.

Further, the present invention makes it possible for a purchaser to purchase goods while freely coordinating merchandise from any retail store, regardless of whether such retail store is located in Japan or in a foreign country. For example, the present invention makes it possible to carry out the same purchasing process when purchasing a skirt from the Ginza district of Tokyo, Japan, a sweater from Paris, France, and a hat from Washington, D.C., USA. Furthermore, by taking an image of oneself wearing merchandise purchased outside the home at an actual retail store, the present invention makes it possible to purchase goods through the Internet by overlaying merchandise from other retail stores onto such image to carry out one's own coordination.

Furthermore, the present invention discloses the system for purchasing body-related goods on the Internet according to Claim 1 ∼ 11, and when having a computer perform according to Claim 1 or 3 and reconfirming of the body-related goods according to Claim 7, the purchaser is able to get advice from seller on email.

Further, by the present invention of the system for purchasing body-related goods on the Internet according to Claim 1 ∼ 11, the purchaser is able to ask questions by email regarding size alteration, such as length of trousers or coat sleeves, and ask questions whether or not additional charge is required.

Moreover, by the present invention of the system for purchasing body-related goods on the Internet according to Claim 1 ∼ 10, when the purchaser tries to purchase goods on the Internet and is not able to find desirable goods, the purchaser is able to ask the specific seller about desirable goods and the seller display the desired goods on a computer screen. Then the purchaser purchase the goods of choice by operating the process of Claim 1 ∼ 10.

Furthermore, by the present invention of the system for purchasing body-related goods on the Internet, a purchaser is able to display by email the goods stocked in other retail stores and purchase goods of choice by operating the process of Claim 1 ∼ 10.

## Claims

1. A system for purchasing body-related goods on the Internet, comprising the steps of:
inputting a three-dimensional, two-dimensional, cross-sectional and/or photographic image of an entire body or a body portion based on size data of the entire body or size data of body portions such as the head, arms and legs;
making an appropriate selection to determine whether the entire body or only a portion thereof will be exposed, whether underwear or clothes will be applied, and whether a three-dimensional image, cross-sectional image, plane image and/or photographic image will be used;
displaying the selected image on a computer screen;
making one or more appropriate selections from merchandise codes, merchandise size data and design data provided from a seller of body-related goods in order to add body-related goods to the displayed image, remove body-related goods from the displayed image, or change the body-related goods shown on the displayed image; and
transmitting a purchase order over the Internet for body-related goods judged to suit body type and design preferences.

2. The system for purchasing body-related goods on the Internet according to Claim 1, wherein the size data can be rewritten with appropriate sizes in accordance with the body type of the purchaser, and wherein the size data is stored on a portable card or other recording medium.

3. The system for purchasing body-related goods on the Internet according to Claim 1 or Claim 2, wherein the determination of whether or not clothes, hats, wigs, eye glasses, belts, gloves, shoes, neckties, necklaces, ornaments and footwear shown in merchandise photographs from mail-order companies will fit one's body type is carried out by having a computer perform appropriate operations to compare one's body size data with one or more of the merchandise code, merchandise size data and design data based on the merchandise photograph.

4. The system for purchasing body-related goods on the Internet according to Claim 1, 2 or 3, wherein a dressed picture or an undressed picture of one's body is taken by a computer-mounted camera and displayed on the computer screen, and wherein body-related goods are coordinated with respect to such displayed picture in order to confirm sizes of the body-related goods.

5. The system for purchasing body-related goods on the Internet according to Claim 1, 2, 3 or 4, wherein the displayed body-related goods and the displayed body image can be moved together to enable views from any desired angle.

6. The system for purchasing body-related goods on the Internet according to Claim 1, 2, 3, 4 or 5, wherein a list of body-related goods from domestic or foreign stores is prepared in advance, and purchases of body-related goods are made over the Internet based on the list.

7. The system for purchasing body-related goods on the Internet according to Claim 1, 2, 3, 4, 5 or 6, wherein cross-sectional views can be taken at any desired location of the body-related goods displayed in a worn state on the body image to enable reconfirmation of the body-related goods.

8. The system for purchasing body-related goods on the Internet according to Claim 1, 2, 3, 4, 5, 6 or 7, wherein the merchandise size data is in the form of two-dimensional data, three-dimensional data or a combination thereof.

9. A system for purchasing body-related goods on the Internet, comprising the steps of:
inputting a three-dimensional, two-dimensional, cross-sectional and/or photographic image of an entire body or a body portion based on size data of the entire body or size data of body portions such as the head, arms and legs;
making an appropriate selection to determine whether the entire body or only a portion thereof will be exposed, whether underwear or clothes will be applied, and whether a three-dimensional image, cross-sectional image, plane image and/or photographic image will be used;
displaying the selected image on a computer screen; and
making one or more appropriate selections from merchandise codes, merchandise size data and design data provided from a seller of body-related goods in order to add body-related goods to the displayed image, remove body-related goods from the displayed image, or change the body-related goods shown on the displayed image;
wherein a body image wearing merchandise from one retail store is first displayed on the computer screen, and then body-related goods from other retail stores located domestically or overseas are displayed onto the first displayed image to carry out coordination, whereby merchandise information can be mutually exchanged to enable the purchaser to purchase all desired goods from one retail store.

10. The system for purchasing body-related goods on the Internet according to Claim 1, wherein a two-dimensional or photographic image of a body portion of the purchaser such as the head and face are displayed on the computer screen to enable the purchaser to coordinate the wearing of hairpieces, glasses, body ornaments and makeup.

11. The system for purchasing body-related goods on the Internet according to any of Claims 1 ∼ 10, further comprising the step of carrying out email communication with a seller of body-related goods, whereby the purchaser is able to ask questions regarding merchandise, request special sizes, request special orders, ask whether or not an additional charge is required, and obtain information on the merchandise offered by other sellers.
